# EUROPEAN PATENT SPECIFICATION

(11) **EP 0 469 815 B1**
(45) Date of publication and mention of the grant of the patent: **28.12.1994**
(21) Application number: 91306905.0
(22) Date of filing: 29.07.1991
(51) Int. Cl.: B60C 11/12, B60C 11/01

(54) **Shoulder blocks for pneumatic tires and pneumatic tires employing such shoulder blocks in treads**
Schulterelement für Luftreifen und Luftreifen mit Schulterelementen in der Lauffläche
Blocs d'épaulement de pneumatiques et pneumatiques ayant ces blocs d'épaulement dans la bande de roulement

(30) Priority: 31.07.1990 JP 201119/90
(43) Date of publication of application: 05.02.1992
(73) Proprietor: Bridgestone Corporation, Tokyo 104 (JP)
(72) Inventor: Ikeda, Hiromichi, Suginami-Ku, Tokyo (JP); Ichiki, Yasufumi, Kodaira City, Tokyo (JP)
(74) Representative: Whalley, Kevin

(56) References cited:
- EP-A- 0 202 122
- EP-A- 0 282 765
- DE-A- 2 127 469
- PATENT ABSTRACTS OF JAPAN vol. 12, no. 113 (M-683)(2960) 9 April 1988 & JP-A-62 241 711

## Description

This invention relates to pneumatic tire shoulder blocks which exhibit high performances on ice and snow, for example, when applied to a heavy duty pneumatic tire, and more particularly the invention relates to such shoulder blocks which exhibit both high traction and braking performances on frozen roads and uneven wear resistance without causing any contradiction between these performances.

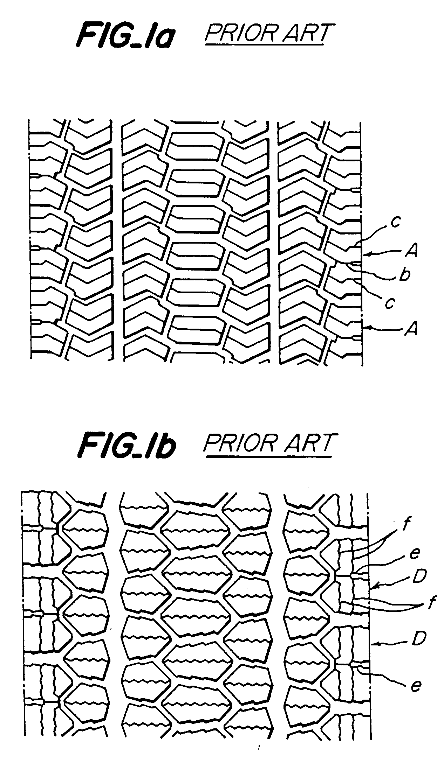

A pattern, for example, shown in Fig. 1 has been used as a tread pattern for a heavy duty pneumatic tire used on ice and snow roads.

Each of shoulder blocks A of the tread pattern shown in Fig. 1a is formed with a sipe b substantially at a center position of the block in a circumferential direction of the tread, and sipes c spaced in the circumferential direction from the sipe b on both sides thereof. These sipes b and c extend substantially in a width direction of the tread in such a manner that their transverse components are greater than circumferential components. On the other hand, each of the shoulder blocks D of the tread pattern shown in Fig. 1b is formed with two sipes e located substantially at a center position of the block as viewed in the circumferential direction of the tread and extending in the width direction of the tread, and two sipes f extending from the sipes e substantially in the circumferential direction in such a manner that their circumferential components are greater than transverse components.

With the shoulder blocks as shown in Fig. 1a, particularly the sipes b and c extending in the width direction of the tread serve to bring about high friction coefficient on ice so that tires having such shoulder blocks exhibit significant traction and braking performances on ice. On the other hand, however, such blocks could not prevent occurrence of uneven wear such as heel and toe wear, shoulder drop wear and the like. Moreover, with the shoulder blocks as shown in Fig. 1b, the circumferential sipes f contribute to generation of lateral gripping forces and can effectively prevent uneven wear such as heel and toe wear, shoulder drop wear and the like. On the other hand, however, since such shoulder blocks do not ensure sufficiently long edge components in the tread width direction, they cannot exhibit expected traction and braking performances on ice.

The present invention provides shoulder blocks for pneumatic tires, which seek to eliminate all the problems of the prior art and which exhibit superior traction and braking performances on ice and in addition prevent occurrence of uneven wear sufficiently. The invention also provides pneumatic tires employing such shoulder blocks in treads.

The present invention provides a shoulder block, including a thin groove or grooves formed substantially at the center of the shoulder block in the circumferential direction of the tread, extending in the width direction of the tread and having a length substantially equal to the width of the block; a plurality of transverse sipes formed in positions spaced from the thin groove in the circumferential direction of the tread, extending in the width direction of the tread and opening at the side wall of the block on the side of the center of the tread; and at least one circumferential sipe extending substantially in the circumferential direction of the tread without intersecting the thin groove or the transverse sipes in such a manner that a circumferential component of said at least one circumferential sipe is greater than its transverse component, opening widths of the thin groove and the transverse and circumferential sipes being not more than 3.0 mm; wherein a difference h₁-h₂ between a depth h₁ of the thin groove and a depth h₂ of the transverse sipe is in a range of 0.75h₁ ≧ h₁ - h₂ ≧ 0.3h₁, and wherein depths H and h₂ of the circumferential sipe and the transverse sipe are such that H ≧ h₂, and wherein the circumferential entire length L of the circumferential sipe and an average length ℓ of the block are such that L ≧ 0.5ℓ.

In this case, the average length ℓ of the block means a value obtained by dividing a surface area of the block by a projection length of the block in the width direction of the tread.

With the block according to the invention, the thin groove in each of the blocks extending in the width direction of the tread and having the length substantially equal to the width of the block can bring about superior traction and braking performances on frozen roads. Moreover, at least one circumferential sipe extending with its circumferential component being greater than the transverse component thereof serves to concentrate shoulder drop wear into a widthwise outer zone defined by this sipe to prevent the shoulder drop wear from progressing inwardly in the width direction of the tread. Moreover, the circumferential sipe can effectively prevent heel and toe wear from occurring inwardly of the sipe.

Further, by forming the thin groove substantially at the center position in the circumferential direction of the tread, the rigidity of the block is effectively prevented from changing in the circumferential direction of the tread. Moreover, by forming the thin groove and the circumferential sipe without intersecting, the lowering of the rigidity of the blocks can be prevented to the utmost.

In this case, the opening widths of the thin groove and the circumferential and transverse sipes are not more than 3.0 mm to bring groove wall of each of them into contact with each other within a grounded surface, so that sufficient rigidity of the block can be ensured when the tread of the tire contacts the road.

Moreover, by setting the circumferentially total length L of the circumferential sipe such that L ≧ 0.5ℓ where ℓ is the average length of the block, the shoulder drop wear can be prevented more effectively. In other words, if the length L of the circumferential sipe is less than the 0.5ℓ, the progress of the shoulder drop wear could not be effectively prevented and may cause the heel and toe wear.

According to the invention, a plurality (for example, two) of transverse sipes are formed in positions spaced in the circumferential direction of the tread from the thin groove, extending in the width direction of the tread and opening at the side wall of the block on the side of the center of the tread, and the difference h₁-h₂ between the depth h₁ of the thin groove and the depth h₂ of the transverse sipe is such that 0.75h₁ ≧ h₁ - h₂ ≧ 0.3h₁. With this construction, reduction in rigidity of the block can be effectively prevented, so that the coefficient of friction on ice is enhanced to further improve the traction and braking performances on ice. In addition, deformation of the block is suppressed to sufficiently prevent the heel and toe wear.

If the difference h₁-h₂ is less than 0.3 h₁, rigidity of the block is greatly lowered to decrease the controllability on ice and also to cause heel and toe wear. On the other hand, if the difference exceeds 0.75h₁, the sipes disappear at a very early stage on wearing, so that the controllability on ice is greatly lowered after disappearance of the sipes.

According to the invention, the transverse sipes are provided in the block on the side of the center of the tread. The reason is that these sipes serve to more effectively improve the traction and braking performances, because the ground contact pressure of the block on the side of the center of the tread is higher than that on the side of the edge of the tread.

In this case, moreover, the depth h₂ of the transverse sipe is smaller than the depth H of the circumferential sipe according to the invention. With this arrangement, even after the transverse sipes have disappeared, the circumferential sipe still exists to continue to prevent the shoulder drop wear on the outer sides of the sipe from progressing axially inwardly of the circumferential sipe and to prevent heel toe wear on the axially inner side of the sipe.

Therefore, the shoulder blocks according to the invention eliminate uneven wear such as heel and toe wear, shoulder drop wear and the like to improve the traction and braking performances on ice sufficiently, thereby enabling the uneven wear-resistance and the motion performance on ice to be compatible at high level.

For a better understanding of the invention, reference is made to the attached drawings, wherein:
Figs. 1a and 1b illustrate tread patterns of the prior art, respectively;
Figs. 2a and 2b are plan views illustrating embodiments of the invention;
Fig. 3 is a graph showing the relationship between the worn amount of block and the coefficient of friction on ice;
Figs. 4 and 5 are graphs showing the relationship between the worn amount of block and the coefficient of friction on ice, respectively; and
Fig. 6 illustrates a tread pattern of one application of the present invention.

Embodiments according to the present invention will be explained based on the drawings.

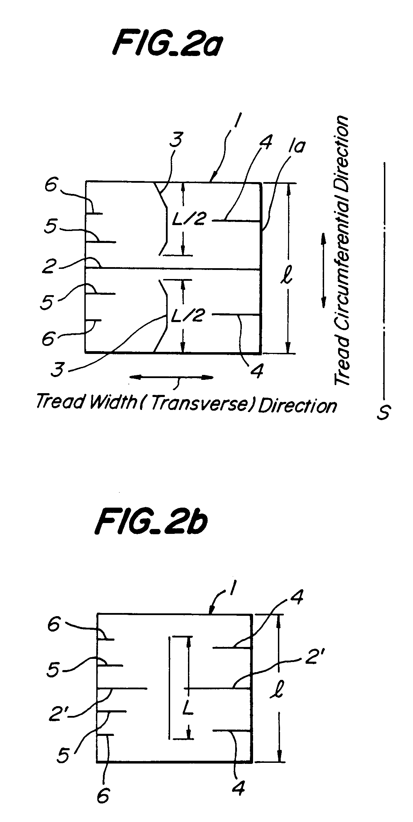

Fig. 2a is a plan view of one embodiment of the present invention.

Referring to Fig. 2a illustrating one embodiment of the invention, a block 1 is rectangular as viewed in plan view, whose right side is located on a side of the center of the tread.

The block 1 in this embodiment is formed with a thin groove 2 arranged substantially at the center in the circumferential direction of the tread and extending over the entire width of the block in the width direction of the tread. The thin groove 2 has, for example, an opening width of 2.0 mm and a depth of 10.0 mm.

Moreover, the block 1 is formed in its surface with at least one (two in this embodiment shown in Fig. 2) circumferential sipe 3 arranged within a range from 5.0 mm to 20 mm as measured from the side wall of the block on the side of an edge of the tread and extending substantially in the circumferential direction without intersecting the thin groove 2 in such a manner that a circumferential component of the sipe is greater than a transverse component thereof. Each of the circumferential sipes 3 has a circumferential length of 20 mm and an opening width of 1.0 mm.

In this embodiment, one end of each of the circumferential sipes 3 opens at one end wall of the block on a stepping-in side or on a kicking-out side. The other end of each of the sipes 3 terminates short of the thin groove 2 by a small distance. It is not necessarily essential that the one end of each of the sipes 3 is open at the end wall on the stepping-in side or on the kicking-out side of the block 1, so long as the overall length L of the sipes 3 in the circumferential direction of the tread fulfills a relationship of L ≧ 0.5ℓ, where ℓ is the average length of the block. Only one circumferential sipe 3 may be formed at a central portion of the block 1 instead of the two sipes 3 above described. In this case, a single thin groove 2 is divided into two sipes by a single sipe 3.

Moreover, the sipe 3 may extend straight, zigzag or in other desired curved shape.

In addition, the block 1 is formed with a plurality (two in Fig. 2a) of transverse sipes 4 spaced in the circumferential directions from the thin groove 2 and extending in the width direction of the tread while opening at a side wall 1a of the block on the side of the center of the tread. These transverse sipes 4 terminate in positions fairly spaced from the circumferential sipes 3. The sipes 4 may have, for example, an opening width of 1.0 mm, a depth of 2.9 mm and a length of 8 mm.

In this case, the difference h₁-h₂ between the depth h₂ (2.9 mm) of the transverse sipe 4 and the depth h₁ (10.0 mm) of the thin groove 2 is in a range of 0.75h₁ ≧ h₁ - h₂ ≧ 0.3h₁. Further, the relationship between the depth h₂ of the transverse sipe 4 and the depth H of the circumferential sipe 3 is in a range of H ≧ h₂.

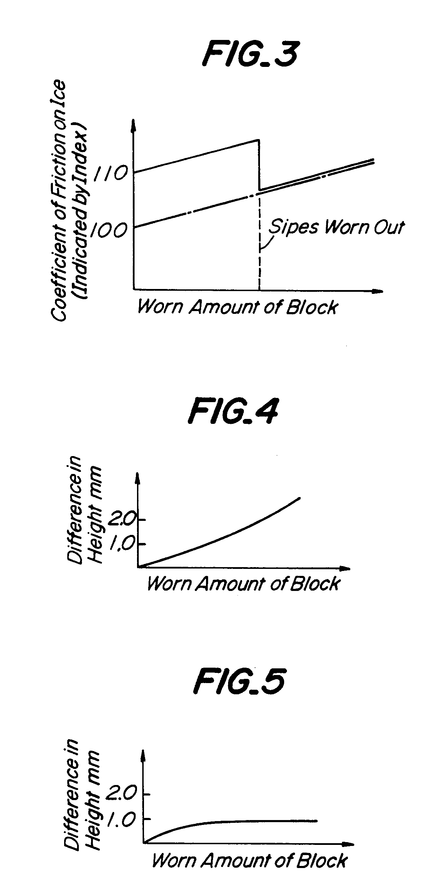

With the shoulder blocks constructed above, the coefficient of friction of the block on ice, which is influenced by the thin grooves 2, increases as shown by a dot-and-dash line in Fig. 3 as the worn amount of the block increases and rigidity of the blocks increases. This tendency continues until the thin grooves 2 substantially disappears.

On the other hand, in the case that each shoulder block includes two transverse sipes 4 in addition to the thin groove 2, as shown by solid lines in Fig. 3, the coefficient of friction on ice is higher corresponding to increase in the number of the sipes than that brought about by the thin grooves 2 as shown by the dot-and-dash line, until the sipes 4 are worn out. This results from the fact that the transverse sipes 4 are too shallow to decrease the rigidity of the block, although the coefficient of friction on ice is proportional to the product between the rigidity of the block and the number of sipes, while the rigidity of the blocks and the number of sipes are contrary to each other.

After the transverse sipes 4 are completely worn out, the coefficient of friction changes as shown by the dot-and-dash line in Fig. 3, according to the block having the remaining thin grooves 2 only. However, when the width direction sipes 4 is worn out, the rigidity of the block already remarkably increases and the coefficient of friction on ice also becomes satisfactory. Therefore, after then, the coefficient of friction on ice does not significantly decrease and rather increases again by continuous wearing of the blocks.

In this embodiment, since the transverse sipes 4 are formed in the block 1 in addition to the thin groove 2, occurrence of heel and toe wear is dispersed to permit slight amounts of heel and toe wear in respective portions of the block divided by the sipes 4 and the thin groove 2, thereby suppressing the heel and toe wear occurring in the entire block 1.

Further, by arranging the difference h₁-h₂ between the depth h₁ of the thin groove 2 and the depth h₂ of the transverse sipe 4 to be such that 0.75h₁ ≧ h₁ - h₂ ≧ 0.3h₁, the performances on ice and the uneven wear-resistance can be improved without lowering the rigidity of the blocks.

Moreover, by arranging the depth h₂ of the sipe 4 and the depth H of the circumferential sipe 3 to be such that H ≧ h₂, the circumferential sipe 3 is caused to effectively operate to prevent the progress of shoulder drop wear axially inwardly from the circumferential sipe 3 and also to prevent heel and toe wear in the area inwardly of the circumferential sipes 3, even when the transverse sipe disappears.

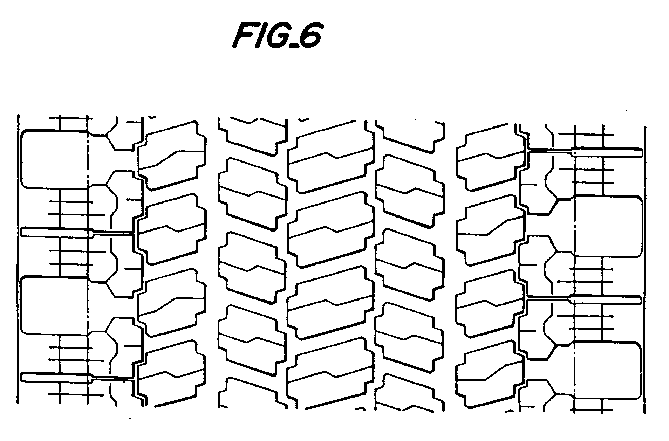

If the blocks 1 do not include the length direction sipes 3, a row of the shoulder blocks undergoes shoulder drop wear relative to an adjacent row of the blocks situated on the side of the center of the tread as shown in Fig. 4. The difference in height between these rows of the blocks increases as the wear of the blocks 1 progresses. However, the circumferential sipe 3 serves to limit the difference in height on axially inner and outer sides of the circumferential sipe 3 to a predetermined value, 1.0 mm in the example shown in Fig. 5, irrespective of the worn amount of the block 1, so that large shoulder drop wear can be sufficiently prevented.

In this case, by arranging the circumferentially total length L of the circumferential sipes 3 to be such that L ≧ 0.5ℓ, where ℓ is the average length of the block, the heel and toe wear and the shoulder drop wear can be prevented with the aid of the circumferential sipes 3.

As shown in Fig. 2a, the block 1 may be formed, on the side of the edge of the tread, with sipes 5 and 6 of one or more kinds extending in the width direction of the tread and being shallower than the transverse sipe 4, although these sipes 5 and 6 are not essential for this invention. These sipes 5 and 6 effectively contribute to improvement of motion performance on ice and wandering-resistance.

Fig. 6 illustrates a block pattern as an application of the shoulder blocks of the invention described above. Such blocks were applied to a tire having a size of 10,00R20, an aspect ratio of 100 and a negative ratio of 34%. A 10 ton truck was equipped with these tires, and its traction and braking performances were tested on an ice and snow road under general running conditions under a rated load and a rated internal pressure. The results of these tires were compared those of a tire having the patterns shown in Figs. 1a and 1b. The traction and braking performances on ice of the tires according to the invention were greatly improved in comparison with those of the tires having the tread pattern shown in Fig. 1b. Moreover, shoulder drop wear and heel and toe wear were remarkably prevented in comparison with those of the tires having the tread pattern shown in Fig. 1a.

Fig. 2b is a plan view of another embodiment according to the present invention, in which a circumferential sipe 3' is formed in a central portion of the shoulder block, while none of opposite ends of the circumferential sipes 3' are opened to circumferential end walls of the shoulder block.

Two transverse sipes 2' are provided substantially symmetrically with respect to the circumferential sipe 3', while extending in an almost central portion of the block as viewed in a circumferential direction.

As can be seen from the above description, in the shoulder blocks according to the invention, each of the blocks is formed with a thin groove extending in the tread width direction and transverse sipes having a predetermined depth relative to the depth of the thin groove. With this arrangement, it is possible to advantageously improve the traction and braking performances on ice, while preventing reduction in rigidity of the block, and also to prevent occurrence of heel and toe wear sufficiently. Moreover, by providing the circumferential sipe having a specified length, it is possible to prevent occurrence of shoulder drop wear effectively so that the motion performance on ice and the uneven wear-resistance can be compatible with each other.

## Claims

1. A shoulder block (1), including:
a thin groove (2) or grooves (2') formed substantially at the center of the shoulder block (1) in the circumferential direction of the tread, said thin groove extending in the width direction of the tread and having a length substantially equal to the width of the block;
a plurality of transverse sipes (4) formed in positions spaced from the thin groove (2) in the circumferential direction of the tread, said transverse sipes extending in the width direction of the tread and opening at the side wall (1a) of the block on the side of the center of the tread;
and at least one circumferential sipe (3) extending substantially in the circumferential direction of the tread without intersecting the thin groove (2) or the transverse sipes (4) in such a manner that a circumferential component of said at least one circumferential sipe is greater than its transverse component, opening widths of the thin groove and the transverse and circumferential sipes being not more than 3.0 mm;
wherein a difference h₁-h₂ between a depth h₁ of the thin groove (2) and a depth h₂ of the transverse sipe (4) is in a range of 0.75h₁ ≧ h₁ - h₂ ≧ 0.3h₁, and wherein depths H and h₂ of the circumferential sipe (3) and the transverse sipe (4) are such that H ≧ h₂, and wherein the circumferential entire length L of the circumferential sipe(s) and an average length ℓ of the block (1) are such that L ≧ 0.5ℓ.

2. A shoulder block as claimed in claim 1, characterized in that said at least one circumferential sipe (3) opens at a circumferential end wall of the shoulder block, and circumferentially extends inside the block while spaced from the side wall of the block on the side of an edge of the tread by 5.0 to 20 mm.

3. A shoulder block as claimed in claim 1, characterized in that said circumferential sipe (3) is formed in a central portion of the shoulder block, while opposite ends of the circumferential sipe are not open to circumferential end walls of the shoulder block.

4. A shoulder block as claimed in any of claims 1 to 3, characterized in that the circumferential sipe (3) extends circumferentially in zigzag fashion.

5. A shoulder block as claimed in any of claims 1 to 4, characterized in that one or more kinds of sipes (5, 6) are provided in that portion of the shoulder block which is located on the side of an edge of the tread, said one or more kinds of the sipes extending in the width direction of the tread and being shallower than the transverse sipe.

6. A tire tread provided with shoulder blocks at a shoulder portion, said shoulder blocks being as claimed in any of claims 1 to 5.

7. A pneumatic tire having a tread, said tread being provided with shoulder blocks at a shoulder portion, said shoulder blocks being as claimed in any of claims 1 to 5.

## Patentansprüche

1. Schulterblock (1), umfassend:
eine schmale Rille (2) oder Rillen (2'), im wesentlichen in der Mitte des Schulterblocks (1) bezüglich der Umfangsrichtung der Lauffläche gebildet, wobei sich die schmale Rille in der Breitenrichtung der Lauffläche erstreckt und eine Länge hat, die im wesentlichen gleich der Breite des Blocks ist;
eine Vielzahl von Quereinschnitten (4), die an Stellen gebildet sind, die von der schmalen Rille (2) in der Umfangsrichtung der Lauffläche einen gewissen Abstand haben, wobei diese Quereinschnitte sich in der Breitenrichtung der Lauffläche erstrecken und bei der Seitenwand (1a) des Blocks auf der Seite der Mitte der Lauffläche offen sind;
und mindestens einen Umfangseinschnitt (3), der sich im wesentlichen in der Umfangsrichtung der Lauffläche erstreckt, ohne die schmale Rille (2) oder die Quereinschnitte (4) zu überkreuzen, wobei eine Umfangskomponente des mindestens einen Umfangseinschnitts größer als ihre Querkomponente ist, und die Öffnungsbreite der schmalen Rille und der Quer- und Umfangseinschnitte nicht größer als 3,0 mm ist;
wobei die Differenz h₁-h₂ zwischen der Tiefe h₁ der schmalen Rille (2) und der Tiefe h₂ des Quereinschnitts (4) in dem Bereich 0,75h₁ ≧ h₁ - h₂ ≧ 0,3h₁ liegt, und wobei die Tiefen H und h₂ des Umfangseinschnitts (3) bzw. des Quereinschnitts (4) so gewählt sind, daß H ≧ h₂ ist, und wobei die gesamte Umfangslänge L des Umfangseinschnitts (der Umfangseinschnitte) und eine mittlere Länge ℓ des Blocks (1) so gewählt sind, daß L ≧ 0,5ℓ ist.

2. Schulterblock gemäß Anspruch 1, dadurch gekennzeichnet, daß der mindestens eine Umfangseinschnitt (3) bei einer Umfangsendwand des Schulterblocks offen ist, und sich innerhalb des Blocks in Umfangsrichtung erstreckt, während er von der Seitenwand des Blocks auf der Seite eines Randes der Lauffläche einen Abstand von 5,0 bis 20 mm hat.

3. Schulterblock gemäß Anspruch 1, dadurch gekennzeichnet, daß der Umfangseinschnitt (3) in einem zentralen Bereich des Schulterblocks gebildet ist, wobei die entgegengesetzten Enden des Umfangseinschnitts zu den Umfangsendwänden des Schulterblocks hin nicht offen sind.

4. Schulterblock gemäß irgendeinem der Ansprüche 1 bis 3, dadurch gekennzeichnet, daß der Umfangseinschnitt (3) sich zickzackförmig in der Umfangsrichtung erstreckt.

5. Schulterblock gemäß irgendeinem der Ansprüche 1 bis 4, dadurch gekennzeichnet, daß eine oder mehr Arten von Einschnitten (5, 6) in dem Bereich des Schulterblocks vorgesehen sind, der auf der Seite eines Randes der Lauffläche gelegen ist, wobei die eine oder mehr Arten von Einschnitten sich in der Breitenrichtung der Lauffläche erstrecken und flacher als der Quereinschnitt sind.

6. Reifenlauffläche, die bei einem Schulterbereich mit Schulterblöcken versehen ist, wobei diese Schulterblöcke so ausgelegt sind, wie dies in irgendeinem der Ansprüche 1 bis 5 beansprucht wird.

7. Luftreifen mit einer Lauffläche, wobei diese Lauffläche bei einem Schulterbereich mit Schulterblöcken versehen ist, und diese Schulterblöcke so ausgelegt sind, wie dies in irgendeinem der Ansprüche 1 bis 5 beansprucht wird.

## Revendications

1. Bloc d'épaulement (1) englobant:
une mince rainure (2) ou des minces rainures (2') formées essentiellement au centre du bloc d'épaulement (1) en direction circonférentielle de la bande de roulement, ladite mince rainure s'étendant dans le sens de la largeur de la bande de roulement et possédant une longueur essentiellement égale à la largeur du bloc;
plusieurs lamelles transversales (4) formées dans des positions espacées de la mince rainure (2) dans la direction circonférentielle de la bande de roulement, lesdites lamelles transversales s'étendant dans le sens de la largeur de la bande de roulement et s'ouvrant sur la paroi latérale (1a) du bloc sur le côté du centre de la bande de roulement;
et au moins une lamelle circonférentielle (3) s'étendant essentiellement en direction circonférentielle de la bande de roulement sans couper la mince rainure (2) ou les lamelles transversales (4) de telle sorte qu'un composant circonférentiel de ladite ou desdites lamelles circonférentielles est plus grand que son composant transversal, les largeurs d'ouverture de la mince rainure et des lamelles transversales et circonférentielles ne représentant pas plus de 3,0 mm;
dans lequel la différence h₁-h₂ entre la profondeur h₁ de la mince rainure (2) et la profondeur h₂ de la lamelle transversale (4) se situe dans le domaine de 0,75h₁ ≧ h₁ - h₂ ≧ 0,3h₁, et dans lequel les profondeurs H et h₂ de la lamelle circonférentielle (3) et de la lamelle transversale (4) sont telles que H ≧ h₂, et dans lequel la longueur circonférentielle totale L de la ou des lamelles circonférentielles et la longueur moyenne ℓ du bloc (1) sont telles que L ≧ 0,5ℓ.

2. Bloc d'épaulement selon la revendication 1, caractérisé en ce que la ou lesdites lamelles circonférentielles (3) s'ouvrent sur une paroi terminale circonférentielle du bloc d'épaulement et s'étendent circonférentiellement à l'intérieur du bloc tout en étant espacées de la paroi latérale du bloc du côté d'un bord de la bande de roulement sur une distance de 5,0 à 20 mm.

3. Bloc d'épaulement selon la revendication 1, caractérisé en ce que ladite lamelle circonférentielle (3) est formée dans une portion centrale du bloc d'épaulement, tandis que les extrémités opposées de la lamelle circonférentielle ne sont pas ouvertes sur les parois terminales circonférentielles du bloc d'épaulement.

4. Bloc d'épaulement selon l'une quelconque des revendications 1 à 3, caractérisé en ce que la lamelle circonférentielle (3) s'étend circonférentiellement en zigzag.

5. Bloc d'épaulement selon l'une quelconque des revendications 1 à 4, caractérisé en ce qu'on procure un ou plusieurs types de lamelles (5, 6) dans la portion du bloc d'épaulement, qui est située du côté du bord de la bande de roulement, ledit ou lesdits types de lamelles s'étendant dans le sens de la largeur de la bande de roulement et étant moins profonds que la lamelle transversale.

6. Bande de roulement pour bandage pneumatique muni de blocs d'épaulement à une portion d'épaulement, lesdits blocs d'épaulement étant tels que revendiqués dans l'une quelconque des revendications 1 à 5.

7. Bandage pneumatique comportant une bande de roulement, ladite bande de roulement étant munie de blocs d'épaulement à une portion d'épaulement, lesdits blocs d'épaulement étant tels que revendiqués dans l'une quelconque des revendications 1 à 5.
